# EUROPÄISCHE PATENTSCHRIFT

(11) **EP 0 533 995 B1**
(45) Veröffentlichungstag und Bekanntmachung des Hinweises auf die Patenterteilung: **26.02.1997**
(21) Anmeldenummer: 91116604.9
(22) Anmeldetag: 27.09.1991
(51) Int. Cl.: H04L 25/38

(54) **Verfahren zur seriellen Übertragung von digitalen Daten**
Serial digital data transmission method
Méthode de transmission en série de données numériques

(43) Veröffentlichungstag der Anmeldung: 31.03.1993
(73) Patentinhaber: SIEMENS AKTIENGESELLSCHAFT, 80333 München (DE)
(72) Erfinder: Höck, Günter, Dipl.-Ing., W-8122 Penzberg (DE); Meissner, Andreas, Dipl.-Ing., W-8000 München 90 (DE)

(56) Entgegenhaltungen:
- EP-A- 0 159 362
- ELECTRONIC ENGINEERING, Bd. 56, Nr. 686, Februar 1984, London, GB, SS 59-70; T. DANBURY ET AL: 'Small area networks using serial data transfer part 2 - Slave devices'
- ELECTRONIC COMPONENTS AND APPLICATIONS, Bd. 5, Nr. 1, November 1982, Eindhoven, NL, SS 15-22; A. GOLDBERGER ET AL: 'Small area networks for serial data transfer'

## Beschreibung

Die Erfindung betrifft ein Verfahren zur seriellen Übertragung von digitalen Daten zwischen einer ersten und mindestens einer zweiten Einrichtung, die über mindestens zwei gemeinsame Leitungen miteinander verbunden sind, von denen die eine Leitung zur Übertragung von digitalen Datensignalen und die andere Leitung zur Übertragung eines die Datensignale synchronisierenden Taktsignales dient, mit den Merkmalen:
(a) die Übertragung der Daten ist in Telegramme unterteilt, die von einer Startbedingung eingeleitet und von einer Stopbedingung beendet werden, und die Start- und Stopbedingungen werden von der ersten Einrichtung gesendet,
(b) die erste Einrichtung sendet ein erstes Telegramm, das eine die zweite Einrichtung kennzeichnende Adresse, ein erstes Kennzeichen und eine zweite Adresse enthält,
(c) durch das erste Kennzeichen wird die zweite Einrichtung veranlaßt, den nachfolgenden Teil des ersten Telegramms zu empfangen,
(d) durch die zweite Adresse wird eine Speicherstelle in der zweiten Einrichtung ausgewählt,
(e) die erste Einrichtung sendet ein zweites Telegramm, welches die die zweite Einrichtung kennzeichnende erste Adresse und ein zweites Kennzeichen enthält,
(f) durch das zweite Kennzeichen wird die zweite Einrichtung veranlaßt, solange an aufeinanderfolgenden Speicherstellen gespeicherte Datenworte zu senden, bis die Stopbedingung des zweiten Telegramms gesendet wird.

Solche Verfahren sind aus Rainer Kind: I2C-Bus: Verteilte Intelligenz auch in Geräten, Elektronik Nr. 7, 1981, bekannt. Sie werden eingesetzt, um seriell Daten zwischen mehreren Einrichtungen, z.B. integrierten Schaltungen, zu übertragen. Die ICs sind dabei über mindestens zwei gemeinsame Signalleitungen, den sogenannten Bus, über den Daten- und Taktsignale übertragen werden, miteinander verbunden. Soll ein Datenaustausch zwischen zwei ICs durchgeführt werden, wird eine Reihe von Telegrammen zwischen den beiden ICs gemäß einem definierten Protokoll übertragen. Eines der ICs, der Master, übernimmt die Steuerung der Datenübertragung, während das andere IC, der Slave, darauf reagiert und Datenworte empfängt oder sendet. Im Slave ist üblicherweise ein Datensspeicher vorgesehen, bei dem auf bestimmte Datenworte über eine Adresse zugegriffen wird.

Zum Ausführen einer Leseoperation, das heißt, wenn Daten vom Slave auf den Master übertragen werden, werden die Datenworte bisher erst auf die Leseanforderung des Masters hin einem Ausgaberegister zur Verfügung gestellt und dann seriell ausgelesen. Die maximale Übertragungsgeschwindigkeit ist dann erreicht, wenn die Zeit zwischen der Leseanforderung und der Ausgabe der ersten Bitstelle des zu übertragenden Datenwortes kleiner oder gleich einer Periode des Taktsignals ist. Bei hohen Taktsignalraten kann es jedoch vorkommen, daß die Bereitstellungszeit für die Datenworte länger als eine Taktperiode dauert. Die Übertragungsgeschwindigkeit ist deshalb durch die Bereitstellungszeit der Datenworte begrenzt.

Der Erfindung liegt daher die Aufgabe zugrunde, das Verfahren der eingangs genannten Art so weiterzubilden, daß eine hohe Datenübertragungsrate bei Leseoperationen möglich ist.

Diese Aufgabe wird bei einem Verfahren der genannten Art dadurch gelöst, daß
(g) das erste von der zweiten Einrichtung zu sendende Datenwort bereits vor dem Empfang des zweiten Kennzeichens in einem Register bereitgestellt wird und
(h) die weiteren von der zweiten Einrichtung zu sendenden Datenworte im Register bereits bereitgestellt werden, wenn das vorhergehende Datenwort gesendet wird.

Die Erfindung bietet den Vorteil, daß die Datenübertragungsrate nur durch die Taktsignalrate bestimmt wird. Schaltungsmittel im Slave, die vorgesehen sind, um die Datenworte bereitzustellen, können so ausgeführt werden, daß sie langsam arbeiten und in der Regel mit weniger Schaltungsaufwand realisierbar sind.

Die Erfindung wird im folgenden anhand eines in den Figuren dargestellten Ausführungsbeispiels näher erläutert. Es zeigen
- Figur 1: ein Prinzipschaltbild zweier über einen Datenbus verbundener integrierter Schaltungen,
- Figur 2: ein Beispiel für ein Telegramm zum Schreiben von Daten,
- Figur 3: ein Beispiel für Telegramme zum Lesen von Daten, und
- Figur 4: ein Beispiel für Telegramme zum Schreiben von Daten und nachfolgendem Lesen weiterer Daten.

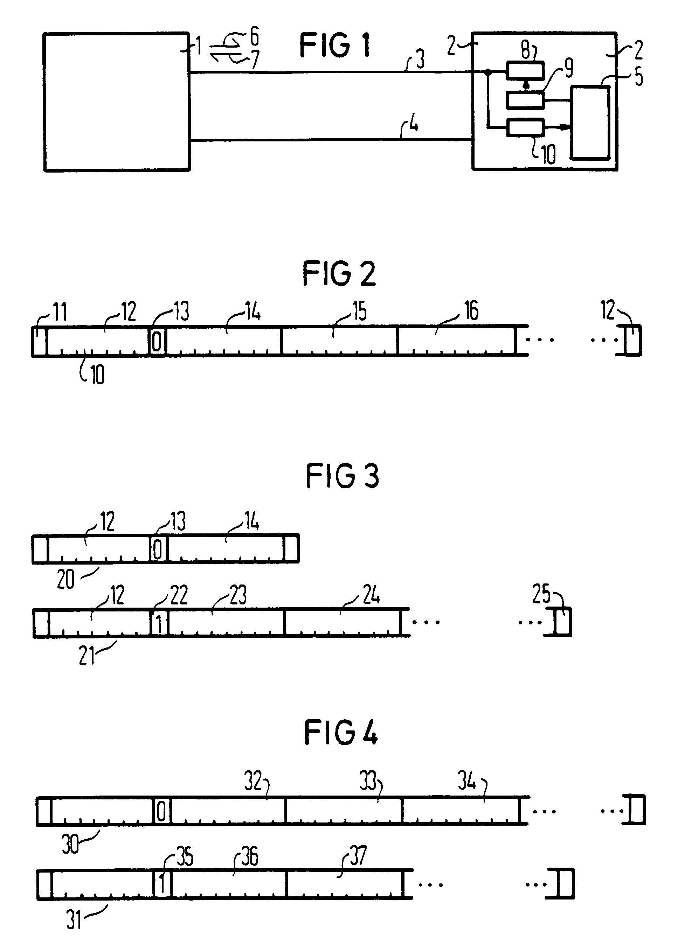

In Figur 1 ist das Prinzipschaltbild von zwei über einen Datenbus verbundenen Einrichtungen gezeigt. Die erste Einrichtung 1 und die zweite Einrichtung 2 sind beispielsweise als eine erste und eine zweite integrierte Schaltung ausgebildet und über zwei Signalleitungen 3, 4 miteinander verbunden. Die Leitung 3 dient zur Übertragung der Datensignale, während auf der Leitung 4 Taktsignale übertragen werden. Die Leitungen 3, 4 bezeichnet man als Bus. In der Regel sind noch weitere - nicht dargestellte - ICs in entsprechender Weise an die Leitungen 3, 4 angeschlossen. Das IC 2 enthält einen Speicher 5, in dem Datenworte gespeichert sind. Über eine Adresse kann auf ein an einer Speicherstelle stehendes Datenwort zugegriffen werden. Es ist ein Register 8 für das Senden von Datenworten und ein Register 10 für den Empfang von Datenworten im IC 2 vorgesehen. Die beiden Register 8, 10 dienen dabei der Parallel-Seriell- bzw. der Seriell-Parallel-Umsetzung der Datenworte. Dem Register 8 ist das Register 9 vorgeschaltet, in dem ein vom IC 2 zu sendendes Datenwort bereits vor der vom IC 1 gesendeten Leseanforderung bereitgestellt wird.

Im folgenden wird der Protokollablauf während der Datenübertragung zwischen dem IC 1 und dem IC 2 beschrieben. Das IC 1 übernimmt die Steuerung des Datenverkehrs, während das IC 2 auf die Steuersignale des IC 1 reagiert und Daten empfängt oder sendet. Das steuernde IC 1 wird üblicherweise als Master, das gesteuerte IC 2 als Slave bezeichnet. Eine Datenübertragung in Richtung 6, also vom Master zum Slave, wird als Schreiben bezeichnet, eine Datenübertragung in Richtung 7 als Lesen.

In Figur 2 ist ein Beispiel für ein Telegramm zum Schreiben von Daten gezeigt. Die Übertragung der digitalen Datensignale wird mit Hilfe des Taktsignals der Leitung 4 im Master und im Slave synchronisiert. Ein digitales Datensignal wird als ein Bit 10 bezeichnet. Ein Telegramm besteht aus einer Vielzahl von aufeinanderfolgenden Bits. Es wird durch eine Startbedingung eingeleitet und durch eine Stopbedingung begrenzt. Als Startbedingung 11 wird beispielsweise der Übergang des Datensignals von H nach L interpretiert, wenn das Taktsignal H ist. Als Stopbedingung 12 wird ein Übergang des Datensignals von L nach H angesehen, wenn das Taktsignal H ist. Ein Pegelwechsel der Datensignale erfolgt nur dann, wenn das Taktsignal L ist. Die Datensignale sind gültig, wenn das Taktsignal H ist. Somit sind die Start- und die Stopbedingung eindeutig festgelegt. Es wäre auch möglich, zur Übertragung der Start- und der Stopbedingung eine weitere Leitung zwischen dem Master 1 und dem Slave 2 vorzusehen. Beim Senden eines Telegramms wurde das Signal auf dieser weiteren Leitung beispielsweise auf L liegen, sonst auf H.

Der Protokollablauf beim Schreibvorgang sieht folgendermaßen aus: Auf die Startbedingung folgt ein 7-bit-Wort, welches eine erste Adresse 12 enthält. Von allen an die Leitungen 3, 4 angeschlossenen ICs wird die Chipadresse 12 gelesen und mit der ihnen eigenen Adresse verglichen. Lediglich das IC 2 erkennt diese Chipadresse als seine eigene Adresse und stellt sich auf den Empfang weiterer Datenbits ein. Es folgt ein erstes Kennzeichen 13, dessen Wert die Richtung der Datenübertragung angibt. Beispielsweise bedeutet ein H-Pegel Lesen, ein L-Pegel Schreiben. In diesem Fall ist das Bit 13 L und Daten werden in Richtung 6 geschrieben. Es folgt ein weiteres 8-bit-Wort, das eine zweite Adresse 14 enthält, mit der eine Speicherstelle im internen Speicher 5 des Slave 2 ausgewählt wird. Die daran anschließend übertragenen Datenworte 15, 16 werden von dieser Speicheradresse ab im Speicher 5 hintereinander abgelegt. Die Stopbedingung 12 beendet dieses Telegramm und gibt die Leitungen 3, 4 für ein weiteres Telegramm zwischen zwei an den Datenbus angeschlossenen ICs frei. Wie bei dem bekannten I2C-Bus wird nach jedem vom Slave empfangenen 8-Bit-Wort ein Bit als Quittung an den Master zurückgesandt. Damit können mögliche Übertragungsfehler erkannt werden. Aus Gründen der Übersichtlichkeit ist dies in der Zeichnung nicht dargestellt.

In der Figur 3 ist ein Beispiel für Telegramme zum Lesen von Daten gezeigt. Der Master 1 sendet ein erstes Telegramm, das die erste Adresse 12, das erste Kennzeichen 13, welches eine Datenübertragung in Richtung Slave angibt, und die zweite Adresse 14 enthält, durch die eine Speicherstelle im internen Speicher 5 ausgewählt wird. Dann folgt ein weiteres Telegramm 21, in welchem der Master die Chipadresse 12 und ein zweites Kennzeichen 22 sendet, durch welches der Slave 2 aufgefordert wird, Daten zu senden. Daraufhin sendet der Slave 2 eine Folge von Datenworten 23, 24, bis vom Master 1 die Stopbedingung 25 gesendet wird. Das Datenwort 23 steht im internen Speicher 5 an der Speicherstelle, die durch die Adresse 14 gekennzeichnet wird. Das Datenwort 24 und mögliche weitere Datenworte stehen an den dieser Adresse folgenden Speicherstellen.

Erfindungsgemäß wird das Datenwort 23 bereits dann im Register 9 bereitgestellt, wenn die Adresse 14 im Slave 2 empfangen wird. Dies geschieht unabhängig davon, ob im folgenden ein Schreibvorgang, wie er in Figur 2 dargestellt ist, oder ein Lesevorgang, wie er in der Figur 3 dargestellt ist, erfolgt. Somit steht als Bereitstellungszeit für das Datenwort 23 der Zeitraum zwischen dem Empfang der Adresse 14 und dem Empfang der Leseanforderung 22 im Slave 3 zur Verfügung. Auf die Leseanforderung 22 hin, wird das Datenwort 23 in das Register 8 geladen und seriell ausgelesen. Das Register 9 ist dann frei und das Datenwort 24, das an der auf die Speicherstelle des Datenwortes 23 folgender Speicherstelle im Speicher 5 steht, kann jetzt schon bereitgestellt werden.

In der Figur 4 ist ein Beispiel für Telegramme zum Schreiben von Daten und einem nachfolgenden Lesen weiterer Daten gezeigt. Der Master 1 sendet ein erstes Telegramm 30, mit dem entsprechend dem in Figur 2 dargestellten Datenverkehr die Datenworte 33, 34 an den Slave 2 gesendet werden. Das Datenwort 33 wird im internen Speicher 5 an der Adresse 32 gespeichert, das folgende Datenwort 34 und mögliche weitere Datenworte werden an den folgenden Speicherstellen abgelegt. Auf den Schreibvorgang des Telegramms 30 hin folgt ein Lesevorgang mit dem Telegramm 31. Nach der vom Master 1 gesendeten Leseanforderung 35 werden vom Slave 2 die Datenworte 36, 37 gesendet. Das Datenwort 36 steht an der Speicherstelle, die auf die Speicherstelle des zuletzt abgespeicherten Datenwortes des Telegramms 30 folgt. Das Datenwort 37 und mögliche weitere Datenworte stehen an den darauf folgenden Speicherstellen.

Erfindungsgemäß wird, wenn ein Datenwort im Telegramm 30 im internen Speicher 5 abgelegt wurde, das auf seine Speicherstelle folgende Datenwort im Register 9 bereitgestellt. Dies geschieht unabhängig davon, ob das Telegramm 30 fortgesetzt oder nach dem gerade gespeicherten Datenwort beendet wird und daraufhin das Telegramm 31 zum Schreiben von Daten begonnen wird.

## Patentansprüche

1. Verfahren zur seriellen Übertragung von digitalen Daten in Anordnungen, bei denen eine erste (1) und mindestens eine zweite (2) Einrichtung über mindestens zwei gemeinsame Leitungen miteinander verbunden sind, von denen die eine Leitung (3) zur Übertragung von digitalen Datensignalen und die andere Leitung (4) zur Übertragung eines die Datensignale synchronisierenden Taktsignales dient, mit den Merkmalen:
(a) die Ubertragung der Daten ist in Telegramme unterteilt, die von einer Startbedingung (11) eingeleitet und von einer Stopbedingung (12) beendet werden, und die Start- und Stopbedingungen werden von der ersten Einrichtung gesendet,
(b) die erste Einricntung sendet ein erstes Telegramm (20), das eine die zweite Einrichtung kennzeichnende Adresse (12), ein erstes Kennzeichen (13) und eine zweite Adress (14) enthält,
(c) durch das erste Kennzeichen wird die zweite Einrichtung (2) veranlaßt, den nachfolgenden Teil des ersten Telegramms zu empfangen,
(d) durch die zweite Adresse wird eine Speicherstelle in der zweiten Einrichtung ausgewählt,
(e) die erste Einrichtung sendet ein zweites Telegramm (21), welches die die zweite Einrichtung (2) kennzeichnende erste Adresse (12) und ein zweites Kennzeichen (22) enthält,
(f) durch das zweite Kennzeichen wird die zweite Einrichtung veranlaßt, solange an aufeinanderfolgenden Speicherstellen gespeicherte Datenworte zu senden, bis die Stopbedingung des zweiten Telegramms gesendet wird,
**dadurch gekennzeichnet,** daß
(g) das erste von der zweiten Einrichtung zu sendende Datenwort (23) bereits vor dem Empfang des zweiten Kennzeichens in einem Register (9) bereitgestellt wird und
(h) die weiteren von der zweiten Einrichtung zu sendenden Datenworte (24) im Register (9) bereits bereitgestellt werden, wenn das vorhergehende Datenwort (23) gesendet wird.

2. Verfahren nach Anspruch 1, **dadurch gekennzeichnet,** daß
(a) im ersten Telegramm (20) unmittelbar nach der zweiten Adresse (14) die Stopbedingung (12) gesendet wird, und
(b) als das erste von der zweiten Einrichtung (2) zu sendende Datenwort dasjenige Datenwort im Register (9) bereitgestellt wird, welches an der durch die zweite Adresse gekennzeichneten Speicherstelle gespeichert ist.

3. Verfahren nach Anspruch 1, **dadurch gekennzeichnet,** daß
(a) im ersten Telegramm (20) nach der zweiten Adresse (14) und vor der Stopbedingung (12) zusätzliche Datenworte von der ersten Einrichtung gesendet werden, und
(b) als das erste zu sendende Datenwort jeweils dasjenige Datenwort im Register (9) bereitgestellt wird, das auf die Speicherstelle folgt, an der gerade ein zusätzliches Datenwort gespeichert wird.

## Claims

1. Method for serial transmission of digital data in arrangements in which a first (1) and at least a second (2) device are interconnected via at least two common lines of which one line (3) serves to transmit digital data signals and the other line (4) serves to transmit a clock signal synchronizing the data signals, having the features:
(a) the transmission of the data is subdivided into telegrams which are started with a start condition (11) and ended with a stop condition (12), and the start and stop conditions are sent by the first device,
(b) the first device sends a first telegram (20) which contains an address (12) identifying the second device, a first identifier (13) and a second address (14),
(c) the first identifier causes the second device (2) to receive the subsequent part of the first telegram,
(d) a memory location in the second device is selected by the second address,
(e) the first device sends a second telegram (21), which contains the first address (12), which identifies the second device (2), and a second identifier (22),
(f) the second device is caused by the second identifier to keep sending data words stored at successive memory locations until the stop condition of the second telegram is sent,
characterized in that
(g) the first data word (23) to be sent by the second device is already provided in a register (9) before the reception of the second identifier, and
(h) the further data words (24) to be sent by the second device are already provided in the register (9) when the preceding data word (23) is sent.

2. Method according to Claim 1, characterized in that
(a) the stop condition (12) is sent in the first telegram (20) immediately after the second address (14), and
(b) provided as the first data word to be sent by the second device (2) is that data word in the register (9) which is stored at the memory location identified by the second address.

3. Method according to Claim 1, characterized in that
(a) additional data words are sent by the first device in the first telegram (20) after the second address (14), and before the stop condition (12) and
(b) provided as the first data word to be sent is in each case that data word in the register (9) which follows the memory location at which an additional data word is just being stored.

## Revendications

1. Procédé pour la transmission en série de données numériques dans des appareils, dans lesquels un premier dispositif (1) et au moins un second dispositif (2) sont reliés entre eux par l'intermédiaire d'au moins deux lignes communes parmi lesquelles une ligne (3) est destinée à la transmission de signaux de données numériques et l'autre ligne (4) est destinée à la transmission d'un signal de synchronisation synchronisant les signaux de données, comportant les caractéristiques suivantes :
(a) la transmission des données est subdivisée en télégrammes, que l'on commence par une condition de départ (11) et auxquels on met fin par une condition d'arrêt (12), et on émet les conditions de départ et d'arrêt par le premier dispositif,
(b) le premier dispositif émet un premier télégramme (20) qui contient une adresse (12) caractérisant le second dispositif, une première caractéristique (13) et une seconde adresse (14),
(c) on amène par la première caractéristique le second dispositif (2) à recevoir la partie suivante du premier télégramme,
(d) on sélectionne par la seconde adresse un emplacement de mémoire dans le second dispositif,
(e) le premier dispositif émet un second télégramme (21), qui contient la première adresse (12) caractérisant le second dispositif (2) et une seconde caractéristique (22),
(f) on amène par la seconde caractéristique le second dispositif à émettre des mots de données mémorisés à des emplacements de mémoire successifs jusqu'à ce que la condition d'arrêt du second télégramme soit émise,
caractérisé par le fait que
(g) on tient prêt le premier mot de données (23) à émettre par le second dispositif dans un registre (9) avant même la réception de la seconde caractéristique,
(h) on tient prêt les autres mots de données (24) à émettre par le second dispositif dans le registre (9), lorsque l'on émet le mot de données (23) précédent.

2. Procédé selon la revendication 1,
caractérisé par le fait que
(a) dans le premier télégramme (20), on émet la condition d'arrêt (12) immédiatement après la seconde adresse (14), et
(b) en tant que premier mot de données à émettre par le second dispositif (2), on tient prêt dans le registre (9) le mot de données qui est mémorisé à l'emplacement de mémoire caractérisé par la seconde adresse.

3. Procédé selon la revendication 1,
caractérisé par le fait que
(a) dans le premier télégramme (20), on émet par le premier dispositif des mots de données supplémentaires après la seconde adresse (14) et avant la condition d'arrêt (12), et
(b) en tant que premier mot de données à émettre, on tient prêt dans le registre (9) le mot de données qui suit l'emplacement de mémoire auquel est justement mémorisé un mot de données supplémentaire.
